# EUROPÄISCHE PATENTSCHRIFT

(11) **EP 2 235 628 B1**
(45) Veröffentlichungstag und Bekanntmachung des Hinweises auf die Patenterteilung: **14.02.2018**
(21) Anmeldenummer: 08864810.0
(22) Anmeldetag: 19.12.2008
(51) Int. Cl.: B60W 50/06, B60W 50/14, G06F 9/455

(54) **KRAFTFAHRZEUG-STEUERVORRICHTUNG**
MOTOR VEHICLE CONTROL DEVICE
DISPOSITIF DE COMMANDE D'UN VÉHICULE À MOTEUR

(30) Priorität: 21.12.2007 DE 102007062114
(43) Veröffentlichungstag der Anmeldung: 06.10.2010
(73) Patentinhaber: Opensynergy Gmbh, 10245 Berlin (DE)
(72) Erfinder: BÖHM, Frank-Peter, 10439 Berlin (DE); HERGENHAN, André, 10439 Berlin (DE); SONCK THIEBAUT, Stefaan, 10623 Berlin (DE); MITSCHKE, Robert, 12055 Berlin (DE); MORICH, Rolf, 12167 Berlin (DE)
(74) Vertreter: Lavoix
(86) Internationale Anmeldenummer: PCT/DE2008/002137
(87) Internationale Veröffentlichungsnummer: WO 2009/080015

(56) Entgegenhaltungen:
- EP-A2- 1 467 282
- GERNOT HEISER (OPEN KERNEL LABS ET AL: "TECHNOLOGY WHITE PAPER. Virtualization for Embedded Systems" INTERNET CITATION 27. November 2007 (2007-11-27), XP007908697 Gefunden im Internet: URL:http://www.ok-labs.com/_assets/downloa d_library/OK_Virtualization_WP.pdf> [gefunden am 2009-06-03]
- GERNOT HEISER ET AL: "Towards trustworthy computing systems: taking microkernels to the next level" ACM SIGOPS OPERATING SYSTEMS REVIEW, Bd. 41, Nr. 4, Juli 2007 (2007-07), Seiten 3-11, XP007908729 DOI: http://doi.acm.org/10.1145/1278901.1278904
- "AUTOSAR Technical Overview (Version 2.0.1)" INTERNET CITATION 27. Juni 2006 (2006-06-27), XP007908698 Gefunden im Internet: URL:www.autosar.org/download/AUTOSAR_Techn icalOverview201.pdf> [gefunden am 2009-06-03]

## Beschreibung

### Hintergrund der Erfindung

### AUTOSAR

AUTomotive Open System ARchitecture (AUTOSAR) ist ein internationaler Verbund mit dem Ziel, einen offenen Standard für Elektrik/Elektronik-Architekturen in Kraftfahrzeugen zu etablieren. Mitglieder sind verschiedene Automobilhersteller und Zulieferer von Elektronikkomponenten.

Folgende Fragestellungen werden u.a. durch AUTOSAR adressiert:
- Standardisierung wichtiger Systemfunktionen
- Skalierbarkeit
- Verschiebbarkeit von Funktionen im Fahrzeugnetzwerk
- Integration und Austauschbarkeit von Software verschiedener Hersteller
- Unterstützung sog. COTS-Software

Die Spezifikation V2.0.1 liegt seit Mitte 2006 vor und kann unter www.autosar.org eingesehen und heruntergeladen werden.

AUTOSAR umfasst u.a. folgende technische Merkmale:
- AUTOSAR standardisiert Methoden, Werkzeuge, Architekturen und funktionale Module für die Softwareentwicklung in der Automobilindustrie.
- AUTOSAR spezifiziert einen Komponenten-basierten Ansatz. Applikationen werden in Komponenten gekapselt. Komponenten sind grundsätzlich durch definierte (Kommunikations-)Mechanismen von der unterliegenden Infrastruktur (Hardware und hardwarenahe Software) getrennt.
- Das in AUTOSAR definierte Modell einer System-Architektur, Virtual Functional Bus - VFB genannt, ermöglicht die Darstellung der für ein automotives Gesamtsystem notwendigen Komponenten und deren Kommunikationsstruktur unabhängig von ihrem Integrationsort (Steuergerät).
- Die in AUTOSAR definierte Software-Architektur für Steuergeräte ist durch drei aufeinander aufbauende Hauptschichten gekennzeichnet. Die unterste Hauptschicht heißt AUTOSAR Basissoftware und abstrahiert von der unterliegenden Hardware. Die oberste Hauptschicht beinhaltet die eigentlichen Applikationskomponenten. Die mittlere Hauptschicht, Run Time Environment - RTE vermittelt zwischen Applikationsschicht und Basissoftware.
- Die AUTOSAR Basissoftware besteht aus einer Vielzahl von Modulen, die wiederum zu verschiedenen Unterschichten (Layer) und Stapeln (Stacks) gehören.
- Die dreilagige AUTOSAR System-Architektur ist hochgradig konfigurierbar:
   - Die Komponenten der VFB-Sicht lassen sich verschiedenen konkreten Integrationsplattformen (Steuergeräten) zuordnen. Die ausgetauschten Signale der VFB-Sicht lassen sich in Abhängigkeit der Zuordnung der Komponenten zu Steuergeräten konkreten Instanzen von Bussystemen zuordnen.
   - In Abhängigkeit der Art und Anzahl der integrierten Applikationen werden Basissoftware und RTE ebenfalls konfiguriert und integriert. Das bedeutet, dass nicht alle Module bzw. nicht alle spezifizierten Modulmerkmale in einer konkreten Implementierung integriert werden müssen.
- Die AUTOSAR Basissoftware enthält Module
   - zur Kommunikation über dedizierte automotive Bussysteme, wie CAN-, FlexRay- und LIN-Bus,
   - zur persistenten Abspeicherung von Applikations- und Systemparametern,
   - zur Kommunikation mit Sensoren und Aktuatoren für die Interaktion mit der Umwelt,
   - für das Fehlermanagement in automotiven Systemen, und
   - für das Management des Systems.
- Ein spezielles Modul der Basissoftware ist das Betriebssystem AUTOSAR OS. Es ist eine Erweiterung des OSEK OS, dass durch seine Mechanismen den Entwurf zeitgesteuerter Systeme, die Partitionierung von Software und die Überwachung zeitlicher Eigenschaften der Software ermöglicht.
- Die Architektur der AUTOSAR Basissoftware und das Betriebssystem AUTOSAR OS sehen zwar eine modulare, aber letztlich doch monolithische Implementierung vor.
- Mit den spezifizierten Modulen der Basissoftware ist es möglich, Softwaresysteme für dedizierte automotive Funktionen, auch mit Echtzeitanforderungen, zu erstellen. Applikationen, die damit erstellt werden können, sind in den Bereichen Antrieb, Komfort oder Fahrerassistenz angesiedelt. Das Dokument "Virtualization for Embedded Systems" (Gernot Heiser et al., November 2007) offenbart die Verwendung von Virtualisierung in Microkernel-basierten eingebetteten Systemen.

### Zusammenfassung der Erfindung

AUTOSAR ist jedoch mit folgenden Nachteilen behaftet:
- AUTOSAR spezifiziert keine dedizierten Methoden, Mechanismen und Module für Applikationen aus den Bereichen Multimedia, Infotainment und der Integration von mobilen Geräten ins Auto.
- Durch die Architektur der AUTOSAR Basissoftware bedingt, ist es schwierig, zusätzliche automotive und nicht-automotive Kommunikationskanäle, wie zum Beispiel MOST, Ethernet, Bluetooth oder USB, die für den Bereich Multimedia/Infotainment erforderlich sind, einzufügen.
- Es besteht keine Möglichkeit, nicht-echtzeitfähige Transportprotokolle, wie zum Beispiel TCP/IP) in die AUTOSAR Basissoftware einzufügen.
- AUTOSAR- unterstützt nicht die Verwendung von Gastbetriebssystemen.

Die vorliegende Erfindung hat zur Aufgabe, eine Kraftfahrzeug-Steuervorrichtung zu schaffen, die auf dem AUTOSAR-Standard basiert und dennoch die oben beschriebenen Nachteile beseitigt oder abmindert.

Die vorliegende Erfindung ist in den unabhängigen Ansprüchen angegeben. Vorteilhafte Ausgestaltungen der Erfindung sind in den Unteransprüchen angegeben.

Der vorliegenden Erfindung liegt u.a. die Idee zu Grunde, die AUTOSAR-Architektur auf eine Microkernel-basierte Architektur abzubilden.

Ein Microkernel ist ein minimales Betriebssystemkonstrukt, das Mechanismen zur Verfügung stellt, um Betriebssystemdienste zu implementieren. Im Wesentlichen gehören dazu:
- das Verwalten des Adressraumes,
- das Bereitstellen und Verwalten von Mechanismen zur Separierung von Programmteilen und deren Ablaufverwaltung (Thread-Management), und
- Mechanismen zur Kommunikation zwischen Programmteilen (Inter-Process-Communication - IPC).

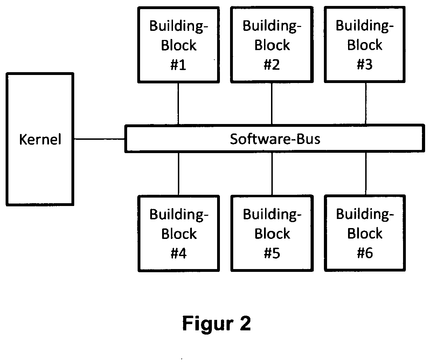

Ein Microkernel umfasst u.a. die folgenden technischen Merkmale:
- Nur der Microkernel läuft im privilegierten 'Kernel'-Mode, der alle Befehle und Möglichkeiten eines Prozessors be- bzw. ausnutzen kann. Alle anderen Programmteile laufen im 'User'-Made, denen nur eingeschränkte Zugriffsrechte auf die Ressourcen des Prozessors zugewiesen sind. Dieses Konzept ist *per se* stark sicherheitsorientiert, da nur dem vertrauenswürdigen Kernel alle Rechte zugewiesen sind und dieser alle anderen Entitäten des Systems überwacht.
   - Die neben dem Microkernel notwendigen Bestandteile des Betriebssystems, wie zum Beispiel Treiber, Protokolle, Dienste für Applikationen, werden als Server in gesonderten Entitäten gespeichert. Diese Entitäten werden nachfolgend 'Building Blocks' genannt, siehe Figur 2.
   - Applikationen werden ebenfalls als Building Blocks dargestellt.
   - Die Kommunikation zwischen den Building Blocks erfolgt über IPC-Mechanismen. Oft wird dieser IPC-Mechanismus auch als Software-Bus bezeichnet, da die angeschlossenen Building Blocks miteinander wie über ein Bussystem kommunizieren.
- Typische Vertreter von Microkernel-Betriebssystemen sind QNX oder L4-Implementierungen.

Somit ermöglicht es die Erfindung, eine erweiterbare Architektur zur Verfügung zu stellen, ohne dabei vom AUTSAR-Standard abrücken zu müssen.

Darüber hinaus ermöglicht es eine Microkernel-basierte Architektur, ein oder mehrere Gastbetriebssysteme mittels Virtualisierung neben dem AUTOSAR-OS betreiben zu können.

Unter Virtualisierung werden in der Softwaretechnik ganz verschiedene Konzepte verstanden, denen gemeinsam ist, von verschiedenen physikalischen Ressourcen zu abstrahieren. Eine spezifische Art dieser Abstrahierung wird Hypervisor oder Virtual Machine Monitor (VMM) genannt und ermöglicht es, auf einem Prozessor mehrere Instanzen eines oder verschiedener Betriebssysteme laufen zu lassen. Diese Instanzen werden Gast-Betriebssysteme genannt.

Microkernel-basierte Betriebssysteme sind per se gute Integrationsplattformen für virtualisierte Gast-Betriebssysteme, da über das Konzept der Building Blocks bereits eine Separierung erfolgt. Der Hypervisor, als Server in einem Building Block implementiert, beeinflusst den Rest der Softwareumgebung nicht.

Virtualisierte Gast-Betriebssysteme sind im Kontext von Embedded Systems aus den Bereichen Industrieautomation und Mobilgeräte (Handys) bekannt. Dort wird diese Technologie eingesetzt, um Softwareteile, die harten Echtzeitanforderungen unterliegen, von solchen, die nur weiche oder keine Echtzeitanforderungen besitzen, zu trennen.

Weiterhin ermöglicht es die erfindungsgemäße Kraftfahrzeug-Steuervorrichtung, zeitgesteuerte und ereignisgesteuerte Systeme zu kombinieren.

Automotive Softwaresysteme werden oft zeitgesteuert. Das bedeutet, die Funktionen des Softwaresystems werden zu bestimmten, voreingestellten Zeiten ausgeführt. Im Gegensatz dazu werden die Funktionen in ereignisgesteuerten Systemen bei Eintreffen bestimmter, voreingestellter Ereignisse ausgeführt.

Der Vorteil von zeitgesteuerten Softwaresystemen gegenüber ereignisgesteuerten besteht im Determinismus. Das System kann so ausgelegt werden, dass zu jedem Zeitpunkt klar ist, welche Funktion (allein) abgearbeitet wird. Die Systemlast kann also so eingestellt werden, dass sie zu jedem Zeitpunkt ausgewogen ist. Dies ist bei rein ereignisgesteuerten, konventionellen Systemen nicht möglich, da der Zeitpunkt des Eintreffens der Ereignisse im allgemeinen unbekannt ist. Dies kann zu bestimmten Zeitpunkten zu Lastspitzen führen, für das das Gesamtsystem ausgelegt werden muss.

Darüber hinaus erfolgt die Software-Applikationsentwicklung im Automobilbau heute häufig modellbasiert, mittels Werkzeugen wie Matlab/Simulink. Diese Werkzeuge unterstützen die Modellierung von zeitsynchronen Systemen, die als zeitgesteuerte Softwaresysteme implementiert werden können.

Die vorliegende Erfindung ermöglicht es, diese Vorteile zeitgesteuerter Systeme zu nutzen, ohne gleichzeitig auf die Implementierung ereignisgesteuerter Systemen verzichten zu müssen.

Beispielsweise ist das CAN-Bussystem ist prinzipiell ereignisgesteuert. Das bedeutet, dass es eine Entkopplung des ereignisgesteuerten Busses und der zeitgesteuerten Software in der Software geben wird. Voll zeitgesteuerte Systeme über Steuergeräte-Grenzen hinweg sind mit diesem Bussystem alleine nicht möglich. Die vorliegende Erfindung ermöglicht es jedoch, das CAN-Busstystem innderhalb einer automotiven Steuervorrichtung mit zeitgesteuerten Systemen zu kombinieren.

Beispielsweise kann dadurch das CAN-Bussystem mit einem FlexRay-Bussystem kombiniert werden. Das FlexRay-Bussystem hat einen synchronen Kanal und bietet seinen angeschlossenen Knoten (Steuergeräten) eine globale Zeit an, auf die sich diese synchronisieren können. Das bedeutet, dass voll zeitsynchrone/zeitgesteuerte Systeme möglich sind. Alle angeschlossenen Steuergeräte bzw. deren Software besitzen dieselbe Zeit, die als Grundlage für die zeitgesteuerte Ansteuerung der Funktionalität dient.

Insgesamt ermöglicht es die erfindungsgemäße Kraftfahrzeug-Steuervorrichtung, beispielsweise Infotainment-Applikationen mit AUTOSAR-basierten Applikationen zu verknüpfen. Darüber hinaus ermöglicht es die erfindungsgemäße Kraftfahrzeug-Steuervorrichtung, virtualisierte Gast-Betriebssysteme zur Trennung von Softwareteilen mit unterschiedlichen funktionalen und nichtfunktionalen Eigenschaften einsetzen. Außerdem ist es möglich, AUTOSAR- und virtualisierte Gast-Betriebssysteme auf einer einzigen Software-Plattform zu koppeln. Weiterhin ist es möglich, Teilsysteme mit unterschiedlichen Strukturen, sowie funktionalen und nicht-funktionalen Anforderungen auf derselben, Prozessor-basierten Hardware zu integrieren.

Diese und andere Merkmale werden nachfolgend anhand von beispielhaften Ausgestaltungen der Erfindung genauer erläutert.

### Figurenbeschreibung

Figur 1 zeigt die grundlegende Architektur nach einer Ausgestaltung der Erfindung.
Figur 2 zeigt allgemein Software-Bus, Kernel und Building Blocks in einer Microkernel-basierten Architektur.
Figur 3 zeigt die Zuordnung von Modulen einer AUTOSAR Basissoftware (linke Seite) zu Building Blocks (rechte Seite).
Figur 4 zeigt die Konfiguration und Generation zur Abbildung einer AUTOSAR Basissoftware auf ein Microkernel-System und Kopplung der Werkzeuge mit der Werkzeugkette von AUTOSAR.
Figur 5 zeigt ein typisches Szenario einer Kommunikation zwischen Komponenten verschiedener Applikationen, die sich auf unterschiedlichen Steuergeräten befinden.
Figur 6 zeigt eine mögliche Partitionierung von AUTOSAR Modulen eines Kommunikationsstapels (COM-Stacks) und Kommunikationsbeziehungen (gestrichelte Linien).
Figur 7 zeigt eine Aufteilung des Kommunikationsstapels (Com-Stacks) in zwei voneinander komplett getrennte Partitionen mit Darstellung der Kommunikationsbeziehungen (gestrichelte Linien).

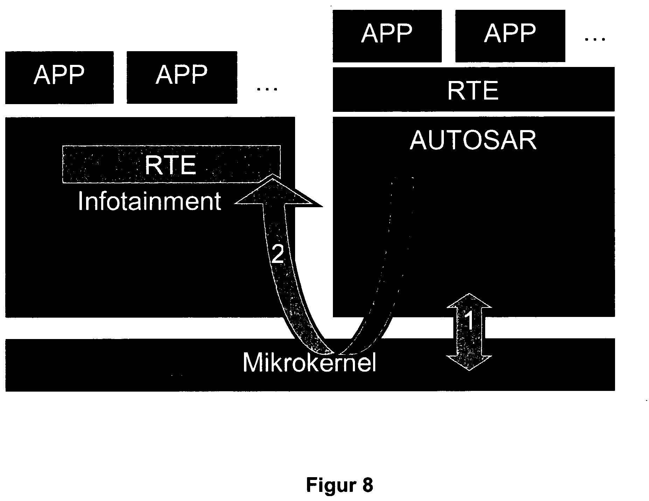

Figur 8 zeigt schematisch die Integration einer AUTOSAR-basierten Steuerung mit einem AUTOSAR-unabhängigen Infotainment-System auf einer Microkernel-basierten Architekur.

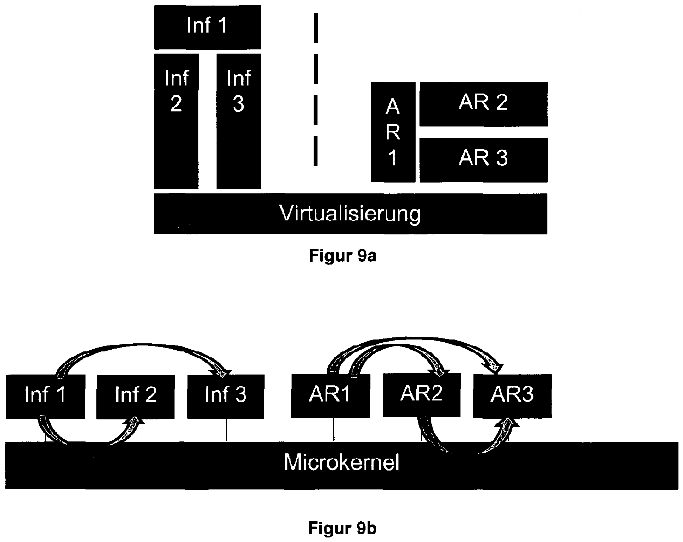

Die Figuren 9a (abstrakt) und 9b (konkret) die Kommunikationsbeziehungen zwischen AUTOSAR-basierten Modulen (AR1-AR3) und AUTOSAR-unabhängigen Modulen (Inf1-Inf3) in einer Microkernel-basierten Architektur.

### Ausgestaltungen der Erfindung

### Grundprinzip

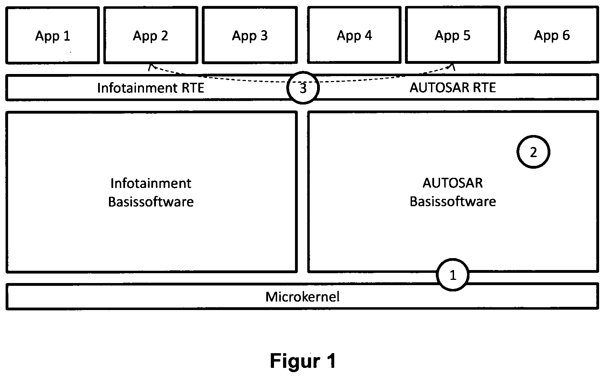

Figur 1 zeigt eine Software-Architektur von Steuergeräten in Fahrzeugen nach einer Ausgestaltung der Erfindung. Diese Architektur unterscheidet grundsätzlich zwischen vier Schichten:
- einer Applikationsschicht,
- einer Basissoftwareschicht, die von der Hardware abstrahiert und grundlegende Dienste anbietet,
- einer konfigurierbaren Adaptionsschicht - Run Time Environment, RTE, die Applikationen und Basissoftware verbindet, und
- einer grundlegende Betriebssystemschicht, die durch einen Microkernel gegeben ist.

Des Weiteren zeigt Figur 1 eine vertikale Teilung:
- die rechte Seite umfasst echtzeitfähige automotive Applikationen und Basissoftwarebestandteile, die durch AUTOSAR-Module abgedeckt werden, und
- die linke Seite umfasst Applikationen und Basissoftwarebestandteile, die in automotiven Multimedia- bzw. Infotainmentanwendungen verwendet werden.

Die in Figur 1 dargestellte Architektur ist in der Lage, Teilsysteme mit unterschiedlichen Strukturen, sowie funktionalen und nicht-funktionalen Anforderungen auf derselben, Prozessor-basierten Hardware zu integrieren.

Gemäß einer Ausgestaltung der Erfindung wird die monolithische Architektur der AUTOSAR Basissoftware auf eine Microkernel-basierte Architektur abgebildet und diese für Implementierungen der AUTOSAR Basissoftware benutzt (siehe Figur 1, Bezugszeichen 1).

Dieses Vorgehen hat mehrere Vorteile:
- Es unterstützt die Modularisierung der Software.
- Es unterstützt den durch AUTOSAR spezifizierten Komponenten-basierten Entwurf von Software-Systemen.
- Es unterstützt die Minimierung der Auswirkungen von fehlerhafter Software und Seiteneffekten.
- Es eröffnet die Möglichkeit, zusätzliche, zur Zeit nicht durch die AUTOSAR-Architektur berücksichtigte Module der Basissoftware in einer einfachen und wohl definierten Weise zu integrieren.
- Es eröffnet die Möglichkeit, AUTOSAR und virtualisierte Gast-Betriebssysteme auf einer Hardware-Plattform zu integrieren und so die Vorteile aus mehreren Laufzeitumgebungen für ein Gesamtsystem zu nutzen.
- Es ermöglicht, Zugriffe auf Ressourcen über dedizierte Policies zu steuern.

Dieser Abbildungs- und Implementierungsprozess kann automatisiert sein.

Bei der Abbildung und Implementierung werden u.a. folgende Kriterien berücksichtigt und Merkmale realisiert:
- Kriterien zur Abbildung der AUTOSAR-Module auf Building Blocks.
- Definition eines Prozesses zur werkzeugunterstützten Abbildung.
- Statische Konfiguration von System, Building Blocks und Modulinstanzen innerhalb der Building Blocks.
- Dynamische Konfiguration und Updates von System, Building Blocks und Modulinstanzen in den unterschiedlichen Laufzeitzeitsystemen der Architektur aus Figur 1.
- Kriterien für Policies für Building Blocks.
- Synchronisation von Building Blocks bzw. Threads in Microkernel-basierten Architekturen bei zeitgesteuerten Systemen.
- Synchronisation der Microkernel-basierten Architektur auf externe Uhren, zum Beispiel bei FlexRay-Systemen.

Gemäß einer Ausgestaltung der Erfindung wird die konfigurierbare Adaptionsschicht RTE von AUTOSAR auch auf andere Laufzeitumgebungen angewendet (siehe Figur 1, Bezugszeichen 3). Im konkreten Fall der Architektur aus Figur 1 bedeutet dies:
- Einführung einer RTE für die Infotainment-Umgebung, die die Infotainment-Applikationen von der Infotainment-Basissoftware trennt (linke Seite in der Architektur),
- die RTE folgt den gleichen Anforderungen und Spezifikationen wie die AUTOSAR RTE,
- die beiden RTEs der rechten und linken Seite der Architektur können prinzipiell über IPC-Mechanismen des Mikrokernels miteinander kommunizieren,
- Applikationen der rechten und linken Seite der Architektur können somit über standardisierte Mechanismen der RTE miteinander kommunizieren,
- Applikationen der rechten und linken Seite der Architektur sind in gewissen Grenzen verschiebbar, d.h. Applikationen der rechten Seite können prinzipiell aufgrund ihrer Mechanismen auf der linken Seite integriert werden und umgekehrt, und
- übergeordnete Funktionalitäten können aus Softwarebausteine von jeweils beiden Seiten zusammengesetzt werden und so die speziellen Eigenschaften beider Seiten nutzen.

In Figur 1 sind zwei Laufzeitumgebungen dargestellt. Es können jedoch noch weitere Laufzeitumgebungen vorgesehen sein. Alle Laufzeitumgebungen können zur Kommunikation untereinander über IPC-Mechanismen des Mikrokernels ausgebildet sein.

### Modularisierung der Software

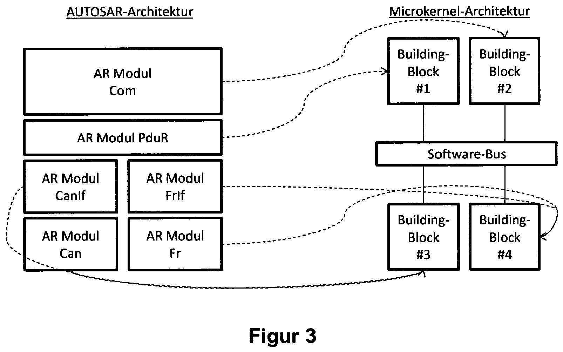

Gemäß einer Ausgestaltung der Erfindung werden die einzelnen Module der monolithischen Architektur der AUTOSAR Basissoftware auf die Building Blocks der Microkernel-basierten Architektur abgebildet (siehe Figur 3). Jeder Building Block fungiert als Server, d.h. jeder Building Block bietet für alle anderen Dienste an. Die APIs der Modulspezifikationen, die als Dienste nach ,außen' exportiert werden, sind dazu auf entsprechende IPC-Mechanismen transformiert. Da die dahinterliegenden Mechanismen wohl definiert sind, kann diese Adaption automatisiert erfolgen.

Beim Prozess der Zuordnung muss grundsätzlich entschieden werden, welche Module auf einen gemeinsamen Building Block abgebildet werden. Prinzipiell gibt es die folgenden Varianten:
- Jedes Modul der AUTOSAR Basissoftware wird in einem Building Block implementiert. In diesem Fall erfolgt jegliche Kommunikation zwischen den Modulen über IPC-Mechanismen. Diese Variante ist nicht bevorzugt, da sie relativ 'teuer' ist; jedes AUTOSAR Modul muss als Server ausgelegt werden, jede Kommunikation erfolgt über zusätzliche Indirektionen.
- Die Gesamtheit der AUTOSAR Basissoftware wird in einem Building Block abgebildet. Die Kommunikation innerhalb der Basissoftware erfolgt über die in AUTOSAR beschriebenen Mechanismen. Die Kommunikation mit anderen Building Blocks, zum Beispiel solche, die AUTOSAR Komponenten kapseln, erfolgt über IPC-Mechanismen. Diese Variante stellt somit ein virtualisiertes AUTOSAR-System dar. Die Vorteile von modularen Microkernel-basierten Architekturen gehen dabei jedoch weitestgehend verloren.
- Eine bevorzugte Variante ist in Figur 3 gezeigt und ist ein Kompromiss aus den vorangestellten Extremen. Es ist möglich, sowohl mehrere Module gemeinsam als auch nur einzelne Module der AUTOSAR Basissoftware auf Building Blocks abzubilden. Diese Variante wird bevorzugt, da sie sowohl die Modularisierung betont, als auch die zusätzlichen Kosten durch die Abbildung auf die Microkernel-Architektur berücksichtigt.

Erfindungsgemäß sind keine allgemeingültigen, geschlossen darstellbaren Abbildungsregeln für die Abbildung von Modulen auf Building Blocks vorgesehen. Kriterien nach bevorzugten Ausgestaltungen der Erfindung können jedoch sein:
- Minimierung der Anzahl der Building Blocks: Dies hat seine Entsprechung in den AUTOSAR Konformanzklassen ICC1, ICC2 bzw. ICC3.
- Cluster, die logisch, funktional zusammengehören: Die Module des AUTOSAR Memory-Stacks haben relativ wenig Interaktionen mit anderen AUTOSAR Modulen und können deshalb zu einem Building Block zusammengefasst werden.
- Cluster, die kommerziell zusammengehören: Das Modul der I/O-Hardware-Abstraktion und andere I/O-relevante Module werden von einer Firma kommerziell angeboten und deshalb auch in einem Building Block gekapselt.
- Cluster, die wegen Sicherheitsaspekten gebildet werden: Z.B. werden die Module des CAN-Kommunikations-Stacks von den Modulen des FlexRay-Kommunikations-Stacks durch die Abbildung auf verschiedene Building Blocks voneinander getrennt.
- Cluster, die auf Grund vorhandener Legacy-Software gebildet werden.
- Andere Kriterien.

### Komponentenbasierter Ansatz

AUTOSAR Software-Komponenten werden in Building Blocks gekapselt. Bei der Abbildung der AUTOSAR Software-Komponenten gelten dieselben Überlegungen wie für die Abbildungen von Modulen auf Building Blocks (siehe oben). Die Mechanismen des Moduls AUTOSAR RTE werden auf die Mechanismen des Software-Busses und evtl. zusätzliche Funktionalitäten in gesonderten Building Blocks abgebildet.

### Minimierung der Auswirkungen von Fehlern und Seiteneffekten

Die Grenzen von Building Blocks können prinzipiell auch Grenzen von getrennten Softwarepartitionen sein. Building Blocks können dabei verschiedene Privilegien besitzen. Building Blocks können sich in diesem Fall gegenseitig nicht beeinflussen, die Subsysteme in den jeweiligen Building Blocks wissen nichts vom jeweils anderen. Seiteneffekte sind in der jeweils anderen Softwarepartition nicht zu erwarten.

Fehler und Auswirkungen von Fehlern können in den Building Blocks gekapselt werden. Fatale Ausfälle in einem Building Block haben keine Auswirkungen auf einen anderen. Somit können Fehlerwirkketten wirksam unterbrochen werden.

Building Blocks können nach Ausfällen separat wieder gestartet werden. Diese Möglichkeit erhöht prinzipiell die Ausfallsicherheit und Verfügbarkeit des Systems.

### Integration zusätzlicher Module

Das Konzept der Building Blocks bildet einen einfachen Mechanismus zusätzliche Module zu integrieren. Diese zusätzliche Funktionalität existiert per se unabhängig von den restlichen Modulen der AUTOSAR Basissoftware. Über ihre Server-Schnittstelle exportieren diese zusätzlichen Module Dienste nach außen. Es ist an den Modulen der AUTOSAR Basissoftware diese über Erweiterungen zu nutzen. Eine erweiterte RTE könnte zum Beispiel Funktionalität des MOST-Kommunikations-Stacks für AUTOSAR Software-Komponenten zur Verfügung stellen.

### AUTOSAR und virtualisierte Gast-Betriebssysteme

AUTOSAR kann in einem Microkernel-basierten Betriebssystem mit einem Gast-Betriebssystem gekoppelt werden. Das Gesamtsystem nutzt dabei die Vorteile der standardisierten AUTOSAR-Architektur und die Vorteile des (zum Beispiel ebenfalls standardisierten) Gast-Betriebssystems. AUTOSAR wird dabei in der oben beschriebenen Weise implementiert. Das Gast-Betriebssystem wird über ein in einem Building Block implementierten Hypervisor integriert.

Echtzeitfähige Treiber, die über die schon vorhandene Funktionalität der AUTOSAR Basissoftware hinausgehen, werden in zusätzlichen Building Blocks implementiert. Auf die Funktionalität kann nun über IPC-Kommunikation zugegriffen werden. Im Falle, dass sowohl das Gast-Betriebssystem als auch erweiterte AUTOSAR Module gleichzeitig zugreifen, bedarf es zusätzlich implementierter Policies, um das zeitliche Verhalten, die Sicherheit und die Integrität des Gesamtsystems zu gewährleisten.

### Automatisierung

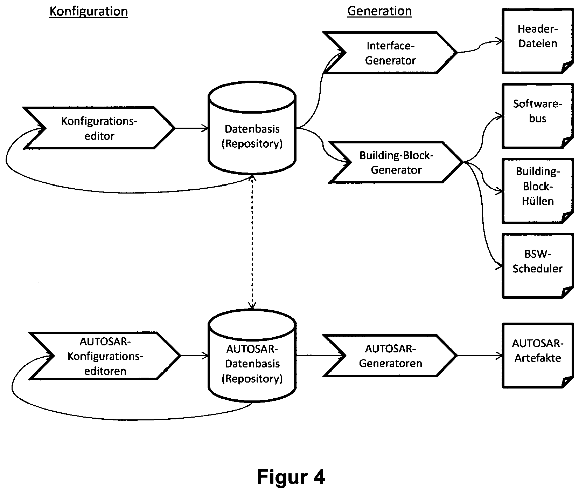

Aufgrund der in den Punkten oben beschriebenen Herausforderungen und Freiheitsgrade beim Finden adäquater Abbildungsvorschriften ist der Abbildungsprozess konfigurierbar gestaltet. Die Abbildungsregeln sind somit per Projekt wählbar. Aus der Zuordnung von AUTOSAR Modulen zu Building Blocks ergeben sich eine Reihe nachgelagerter Konfigurationen der Building Blocks und der Module innerhalb der Building Blocks. Der konfigurierbare Abbildungsprozess besteht aus einem Konfigurations- und einem Generationsschritt und wird notwendigerweise durch Werkzeuge unterstützt. Zu einem minimalen Satz an Werkzeugen gehören ein Konfigurationseditor, ein Interfacegenerator und ein Building-Block-Generator. Die Funktionen des AUTOSAR Moduls 'BSW Scheduler' werden durch die Konfigurations-/Generationsprozesse mit erstellt. Die Werkzeuge sind in die AUTOSAR-Werkzeugkette integriert. Siehe Figur 4.

### Konfigurationseditor

Der Konfigurationseditor ermöglicht
- die Abbildung von AUTOSAR-Modulen auf Building Blocks,
- das Beschreiben von Abbildungsregeln (zur automatischen und halbautomatischen Zuordnung von AUTOSAR Modulen zu Building Blocks),
- die Abbildung von APIs der AUTOSAR-Module auf exportierte IPC-Schnittstellen der zugehörenden Building Blocks,
- die Verhaltensbeschreibung (-festlegung) der exportierten Schnittstellen,
- die Abbildung von 'Schedulable Objects' der AUTOSAR-Module auf Threads des Microkernel-Systems,
- die Zuweisung von Prioritäten zu Threads,
- das Festlegen von Schedules (Ablaufreihenfolgen von Threads),
- die Zuweisung der Implementierung von Synchronisationsmechanismen und atomaren Zugriffen auf exklusive Ressourcen (Interruptsperren, Semaphore, etc.), und
- die Zuweisung von bestimmten Policies für bestimmte Zugriffe auf Building Blocks.

Die eigentliche Konfiguration kann dabei prinzipiell automatisch, halbautomatisch oder manuell erfolgen.

Der Konfigurationseditor hat Zugriff auf eine Datenbank, die
- Verweise auf die zuzuordnenden AUTOSAR-Module beinhaltet, und
- Verweise auf die APIs, 'Schedulable Objects' und weitere zu implementierende Eigenschaften (zum Beispiel Synchronisationspunkte, exklusiver Zugriff auf Ressourcen).

Die Konfigurationsergebnisse werden in eine Datenbank geschrieben.

### Interfacegenerator

Der Interfacegenerator generiert die notwendigen IPC-Interfaces per Building Block in Form von Header-Files. Der Interfacegenerator hat Zugriff auf die Ergebnisse des Konfigurationsprozesses, insbesondere aber auf:
- die Ergebnisse der Abbildung der APIs der AUTOSAR Module auf die exportierten Schnittstellen per Building Block, und
- die Verhaltensbeschreibung der IPC-Schnittstellen.

### Building-Block-Generator

Der Building-Block-Generator generiert den Software-Bus, die Integrationshüllen der Building Blocks und die Funktionalität des ,BSW Scheduler'-Moduls. Der Building-Block-Generator hat Zugriff auf die Ergebnisse des Konfigurationsprozesses, insbesondere aber auf:
- die Ergebnisse der Abbildung AUTOSAR-Module zu Building Blocks,
- die Struktur- und Verhaltensbeschreibungen der IPC-Schnittstellen der Building Blocks,
- die Informationen über die benötigten Threads, deren Prioritäten und Schedules
- den Zuweisungen von Funktionalitäten zu Threads,
- den Zuweisungen bestimmter Policies von Building Blocks, und
- den Implementierungsanweisungen für Synchronisation und für Zugriffe auf exklusive Ressourcen.

Der generierte Software-Bus ist die Gesamtheit aller IPC-Kommunikationen zwischen den beteiligten Building Blocks. Die Integrationshüllen vermitteln zwischen den Interfaces der Building Blocks und den exportierten APIs der AUTOSAR Modulinstanzen in dem Fall, dass die Building Blocks Module der Basissoftware beinhalten. In dem Fall, dass Building Blocks Applikationen beinhalten, sind die Integrationshüllen die implementierte AUTOSAR RTE. Die Funktionalität des BSW Scheduler-Moduls wird für jede AUTOSAR Modulinstanz innerhalb eines Building Blocks gesondert generiert.

### Weitere Werkzeuge

Weitere Werkzeuge zur Unterstützung der Abbildungsheuristik sind denkbar. Analysewerkzeuge können zum Beispiel das zeitliche Verhalten bei der Zuweisung von AUTOSAR Modulen zu Building Blocks berücksichtigen.

### Erweiterungen

AUTOSAR geht von einer statischen Konfiguration der Software aus. Das bedeutet, dass die Konfiguration der Software zu Beginn der Laufzeit feststeht. Eine Erweiterung des oben vorgestellten Systems auf dynamische, d.h. zur Laufzeit vorgenommene Konfigurationen ist denkbar.

Ein spezifischer Anwendungsfall für eine dynamische Konfiguration ist die Aktualisierung von Software während des Lebenszyklus eines Steuergerätes. Die inhärente Modularisierung von Microkernel-Architekturen erleichtert die Implementierung dieses Anwendungsfalls.

### Betriebssystem AUTOSAR OS

Mikrokernel-basierte Betriebssysteme sind Betriebssysteme und bieten somit zumindest einen allgemein akzeptierten Satz an Grundfunktionen an. Insofern ist es prinzipiell technisch möglich, die grundlegende Funktionalität eines AUTOSAR OS auf ein Mikrokernel-basiertes Betriebssystem abzubilden.

Bereits die Abbildung dieser Grundfunktionalität bietet einige Freiheitsgrade der Realisierung. Die Spezifikation des AUTOSAR OS bietet die Möglichkeit eines Adaptionslayers, der das eine System an das andere anpasst. Die Philosophie dahinter entspricht aber eher der einer monolithischen Struktur und weniger der eines modularen Mikrokernel-Systems. Deshalb wird diese Möglichkeit verworfen.

Stattdessen wird nach einer Ausgestaltung der Erfindung vorgesehen, die Eigenschaften eines Microkernel-Systems implizit zu nutzen, um die geforderten Funktionalitäten des AUTOSAR OS darzustellen. Zum Beispiel wird das AUTOSAR OS Objekt 'Task' implizit durch die Benutzung der vorhandenen Objekte ,Tasks/Protection Domains' bzw. 'Threads' dargestellt.

Darüber hinaus gibt es nicht-triviale Probleme bei der Darstellung der AUTOSAR OS Funktionalität mittels eines Microkernel-Betriebssystems. Dazu gehören:
- die zeitliche Synchronisation auf externe bzw. globale Zeiten, und
- die Überwachung vorgegebener zeitlicher Eigenschaften von Threads/Tasks und des allgemeinen (zeitlichen) Ablaufs.

Die durch das AUTOSAR OS geforderte Überwachung der Speicherbereiche von bestimmten Softwarepartitionen ist durch Microkernel-Systeme zumeist inhärent gegeben. Building Blocks werden bestimmte Speicherbereiche zugewiesen, die durch den Microkernel überwacht werden.

Aus den zu voranstehenden Ausführungen zu zeitgesteuerten und. ereignisgesteuerten Systemen folgt notwendigerweise, dass die Betriebssysteme der an den FlexRay-Bus angebundenen Steuergeräte die Möglichkeit anbieten müssen, sich auf die globale Zeit synchronisieren zu können. Nur in diesem Falle sind voll synchrone/zeitgesteuerte Systeme über Steuergerätegrenzen überhaupt möglich.

Im synchronisierten Zustand ist ein Steuergerät 1 in der Lage, im einen bestimmten Moment Informationen an einen reservierten synchronen Slot des Bussystems (FlexRay) zu liefern, die dann von einem anderen Steuergerät 2 zum selben oder anderen festgesetzten Zeitpunkt empfangen und weiterverarbeitet werden können.

Die Synchronisation zwischen globaler Zeit (bei FlexRay durch den Bus gegeben) und den Zeiten der angeschlossenen Knoten hat kontinuierlich zu erfolgen. Jitter und das Auseinanderlaufen der Zeiten sind durch die technischen Grenzen der Systeme (Hardware und Software) möglich.

AUTOSAR fordert von einem AUTOSAR Betriebssystem die Möglichkeit der Synchronisation auf externe und globale Zeiten. Die Synchronisation der Betriebssysteme auf eine globale Zeit ist kein triviales Problem. Im Allgemeinen sind Anpassungen an den Scheduler des Betriebssystemes notwendig. Ein 'normales' Microkernel-basiertes System bietet hierzu im allgemeinen keine Standardmechanismen. Das bedeutet, dass die Scheduling-Mechanismen des Microkernel-basierten Systems um die Möglichkeiten des Aufsynchronisierens auf externe bzw. globale Zeiten erweitert sind. Des Weiteren ist der Scheduler um die Möglichkeit erweitert, nach einem Zeitschema (absolut oder relativ zu bestimmten globalen Zeiten) Threads bzw. Tasks zyklisch oder azyklisch ablaufen zu lassen.

### Beispiel für die Abbildung von Modulen auf Building Blocks des Microkernel-Systems

### Szenario

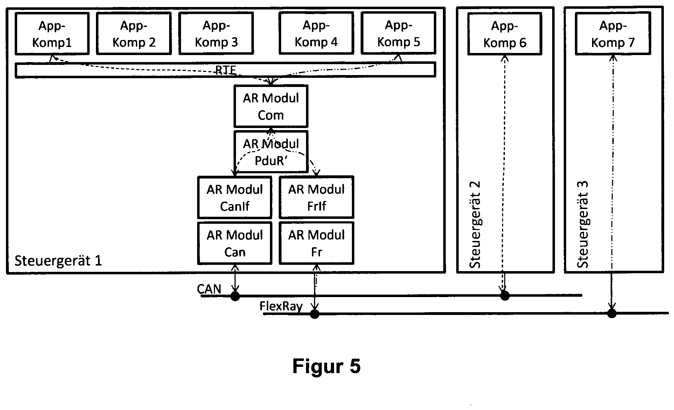

Figur 5 zeigt ein typisches Kommunikationsszenario in automotiven Systemen. Applikationskomponenten verschiedener Steuergeräte kommunizieren miteinander, indem sie Signale über externe Busse oder intern austauschen.

Der in der Abbildung des Steuergerätes 1 dargestellte Kommunikationsstack entspricht der AUTOSAR Architektur der Basissoftware. Dargestellt sind die Module, die für die Kommunikation über den CAN-Bus bzw. FlexRay-Bus notwendig sind.

Figur 5 zeigt, dass es für die Kommunikation über die unterschiedlichen Busse gemeinsam genutzte Module gibt, nämlich das Com-Modul und das Pdu-Router-Modul PduR:
- Die Applikations-Komponente 1 des Steuergerätes 1 soll über den CAN-Bus mit der Applikations-Komponente 6 kommunizieren können.
- Die Applikation--Komponente 5 des Steuergerätes 1 soll über den FlexRay-Bus mit der Applikations-Komponente 7 kommunizieren können.
- Die Applikations-Komponenten App-Komp 1-3 sollen von einem Zulieferer und die Komponenten App-Komp 4 und 5 von einem zweiten Zulieferer zugeliefert werden.

### Einfache Abbildung des Kommunikationsstacks

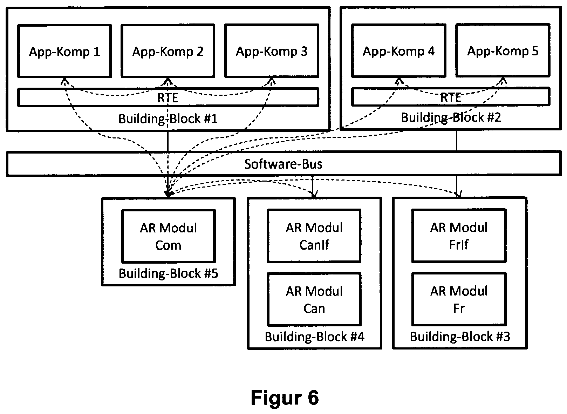

Figur 6 zeigt eine erste mögliche Abbildung des in Figur 5 dargestellten Szenarios. Die Applikations-Komponenten App-Komp 1-3 bzw. 4 und 5 werden in separaten Building-Blocks (Building Block #1 bzw. #2) gekapselt, da die Komponenten von jeweils unterschiedlichen Zulieferern kommen. Die ,RTEs' für die Komponenten App-Komp 1-3 bzw. 4 und 5 stellen die jeweilige Ankopplung an den Software-Bus, entsprechend den erforderlichen Interfaces, sicher. Dies gilt sowohl für die zur Verfügung gestellten Dienste bzw. Signale, als auch für die benötigten Dienste und Signale.

Das Modul der Basissoftware Com-Modul stellt für alle Busse die Umsetzung der Signale der Applikations-Komponenten auf Botschaften des jeweiligen Busses mit entsprechenden Schedules sicher. Da es ein von allen Bustypen und -instanzen genutztes Modul ist, wird es in einem gesonderten Building Block (#5) implementiert.

Die jeweiligen Bustypen (hier CAN-Bus und FlexRay-Bus) werden aus verschiedenen Gründen in separaten Building Blocks implementiert: CAN-Bus und FlexRay-Bus besitzen sehr unterschiedliche Verhaltenseigenschaften; außerdem können Can- bzw. FlexRay-Module potentiell von unterschiedlichen Zulieferern kommen.

Das Modul Pdu-Router verschwindet in dieser Modulabbildung vollständig. Die Routing-Eigenschaften des Moduls (vom Com-Modul auf die Modulstacks bestimmter Bussysteme) kann vollständig durch den Software-Bus bzw. den IPC-Mechanismen des Microkernels abgedeckt werden.

### Instantiierter Kommunikationsstack

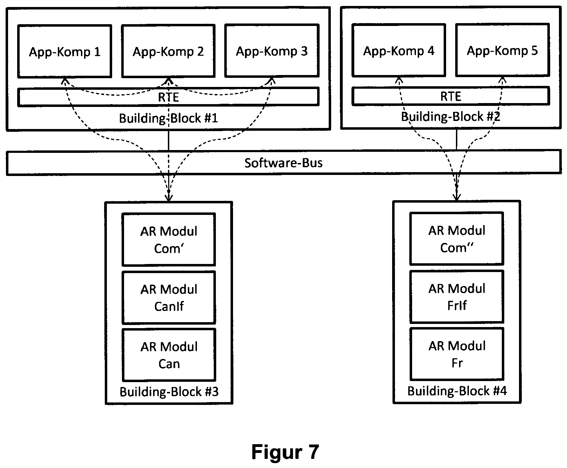

Figur 7 zeigt eine alternative Ausgestaltung des in Figur 5 dargestellten Szenarios. Die Applikations-Komponenten werden in derselben Weise wie im vorangehenden Abschnitt erläutert, abgebildet.

Der Unterschied zur Lösung aus dem vorangehenden Abschnitt liegt in der unterschiedlichen Darstellung der Kommunikationsstacks. In der Lösung aus Figur 7 gibt es jeweils komplette Stacks für die unterschiedlichen Bussysteme. Im Gegensatz zur vorangestellten Lösung gibt es nicht mehr eine geteilte Instanz des AUTOSAR-Moduls Com, sondern für die unterschiedlichen Bussysteme jeweils eine spezielle Instanz des Com-Moduls. Dies ist durch die speziellen Eigenschaften des Com-Moduls möglich. Die Eigenschaften sind nämlich per Botschaft (Message oder Protocol Data Unit (PDU)) konfigurierbar. Unterschiedliche Bussysteme benutzen aber in jedem Fall unterschiedliche PDUs. Das bedeutet aber auch, das für unterschiedliche Bussysteme verschieden konfigurierte Instanzen des Com-Moduls generiert werden können.

Dieser Ansatz kann auch auf verschiedene Instanzen eines Bussystems appliziert werden.

### Beispiel für die Implementierung der Infotainment-Basissoftware

Die Basissoftware für das Infotainment-System kann zum Beispiel durch ein 'Embedded Linux'-System oder Microsoft AUTO-System implementiert werden.

## Patentansprüche

1. Kraftfahrzeug-Steuervorrichtung, umfassend:
einen Microkernel;
ein oder mehrere Building Blocks zur Implementierung dedizierter echtzeitfähiger automotiver Applikationen, wobei die ein oder mehrere Building Blocks ein erstes echtzeitfähiges Betriebssystem implementieren; ein oder mehrerer Building Blocks zur Implementierung von Infotainment- oder Multimedia-Applikationen; wobei die Kraftfahrzeug-Steuervorrichtung eine Software zur Steuerung einer Vielzahl von Applikationen umfasst, wobei die Software folgende Schichten aufweist:
eine Applikationsschicht mit der Vielzahl von Applikationen;
eine Basisdienst-Schicht mit einer ersten Vielzahl von Basisdiensten und
eine zweiter Vielzahl von Basisdiensten, zur Durchführung der Applikationen, wobei die erste Vielzahl von Basisdiensten zur Durchführung der echtzeitfähigen automotiven Applikationen ausgebildet ist und die zweite Vielzahl von Basisdiensten zur Durchführung der Infotainment- oder Multimedia- Applikationen ausgebildet ist;
eine Adaptionsschicht mit mindestens einer ersten Laufzeitumgebung, die der ersten Vielzahl von Basisdiensten zugeordnet ist, und einer zweite Laufzeitumgebung, die der zweiten Vielzahl von Basisdiensten zugeordnet ist; und
eine Betriebssystemschicht mit dem Microkernel;
einen Building Block, dem ein Gast-Betriebssystem zugeordnet ist, wobei das Gast-Betriebssystem als virtualisiertes Gast-Betriebssystem mittels eines durch einen Building Block implementierten Hypervisors in die Kraftfahrzeug-Steuervorrichtung integriert ist, wobei die Infotainment- oder Multimedia-Applikationen das Gast-Betriebssystem verwenden;
und
einen gemeinsamen Kommunikationsstack, über den die Building Blocks mittels IPC-Mechanismen des Microkernels untereinander kommunizieren können, wobei der Microkernel einen Scheduling Mechanismus umfasst, der eingerichtet ist, um sich auf externe oder globale Zeiten aufzusynchronisieren, um das erste Betriebssystem auf externe oder globale Zeiten aufzusynchronisieren.

2. Kraftfahrzeug-Steuervorrichtung nach Anspruch 1, wobei eines oder mehrerer der Building Blocks als Server ausgebildet ist, um den anderen Building Blocks Zugriff auf deren Dienste zu ermöglichen.

3. Kraftfahrzeug-Steuervorrichtung nach Anspruch 1 oder 2, wobei die APIs der Module durch entsprechende IPC-Mechanismen zwischen den Building Blocks abgebildet sind.

4. Kraftfahrzeug-Steuervorrichtung nach einem der vorhergehenden Ansprüche, wobei mindestens einer der Building Blocks ein zeitgesteuertes System und mindestens ein anderer der Building Blocks ein ereignisgesteuertes System bereitstellt.

5. Kraftfahrzeug-Steuervorrichtung nach Anspruch 4, wobei das zeitgesteuerte System durch einen FlexRay-Bus und das ereignisgesteuerte System durch einen CAN-Bus gebildet wird.

6. Kraftfahrzeug-Steuervorrichtung nach einem der vorhergehenden Ansprüche, einer der Building Blocks einen Memory-Stack abbildet.

7. Kraftfahrzeug-Steuervorrichtung nach einem der vorhergehenden Ansprüche, umfassend einen oder mehrere echtzeitfähige Treiber, die gemeinsam oder jeweils durch eine bzw. mehrere der Building Blocks implementiert sind.

8. Kraftfahrzeug-Steuervorrichtung nach einem der vorhergehenden Ansprüche, wobei eines oder mehrere der Module eine MOST, Ethernet, Bluetooth und/oder USB-Schnittstelle implementieren.

9. Kraftfahrzeug-Steuervorrichtung nach Anspruch 1, wobei die Laufzeitumgebungen zur Kommunikation untereinander über IPC-Mechanismen des Mikrokernels ausgebildet sind.

10. Kraftfahrzeug-Steuervorrichtung nach Anspruch 9, wobei ein erster Teil der Applikationen der ersten Laufzeitumgebung zugeordnet ist, und ein zweiter Teil der Applikationen der zweiten Laufzeitumgebung zugeordnet ist, und wobei die Applikationen über die ersten und zweiten Laufzeitumgebungen untereinander kommunizieren können.

## Claims

1. A motor vehicle control device, comprising:
a microkernel;
one or several building blocks for implementing dedicated, real-time capable automotive applications, wherein the one or several building blocks implement a first real-time capable operating system;
one or several building blocks for implementing infotainment or multimedia applications; wherein the motor vehicle control device comprises a software for controlling a plurality of applications, wherein the software has the following layers:
an application layer with the plurality of applications;
a basic service layer with a first plurality of basic services and
a second plurality of basic services, for carrying out the applications,
wherein the first plurality of basic services is designed for carrying out the real-time capable automotive applications and the second plurality of basic services is designed for carrying out the infotainment or multimedia applications;
an adaptation layer with at least one first runtime environment, which is assigned to the first plurality of basic services, and a second runtime environment, which is assigned to the second plurality of basic services; and
an operating system layer with the microkernel;
a building block, to which a guest operating system is assigned, wherein the guest operating system is integrated as a virtualized guest operating system by means of a hypervisor implemented by a building block into the motor vehicle control device, wherein the infotainment or multimedia applications use the guest operating system; and
a common communication stack, via which the building blocks can communicate with one another by means of IPC mechanisms of the microkernel, wherein the microkernel comprises a scheduling mechanism, which is set up, in order to be synchronized to external or global times, in order to synchronize the first operating system to external or global times.

2. A motor vehicle control device according to Claim 1, wherein one or several of the building blocks is designed as a server, in order to allow the other building blocks to gain access to their service.

3. A motor vehicle control device according to Claim 1 or 2, wherein the APIs of the modules are mapped by the relevant IPC mechanisms between the building blocks.

4. A motor vehicle control device according to any one of the preceding claims, wherein at least one of the building blocks provides a time-controlled system and at least another one of the building blocks provides an event-controlled system.

5. A motor vehicle control device according to Claim 4, wherein the time-controlled system is formed by a FlexRay-bus and the event-control system by a CAN-Bus.

6. A motor vehicle control device according to any one of the preceding claims, one of the building blocks maps a memory stack.

7. A motor vehicle control device according to any one of the preceding claims, comprising one or several real-time capable drivers, which are implemented jointly or in each case by one or several building blocks.

8. A motor vehicle control device according to any one of the preceding claims, wherein one or several of the modules implement a MOST, Ethernet, Bluetooth and/or USB interface.

9. A motor vehicle control device according to Claim 1, wherein the runtime environments are designed for communication with each one another via IPC mechanisms of the microkernel.

10. A motor vehicle control device according to Claim 9, wherein a first part of the applications is assigned to the first runtime environment and a second part of the applications is assigned to the second runtime environment, and wherein the applications can communicate with one another via the first and second runtime environments.

## Revendications

1. Dispositif de commande de véhicule à moteur comprenant :
un micro-noyau ;
un ou plusieurs blocs de construction pour l'implémentation d'applications automotrices dédiées en temps réel, l'un ou plusieurs blocs de construction implémentant un premier système d'exploitation en temps réel ;
un ou plusieurs blocs de construction pour l'implémentation d'applications d'infotainment ou multimédia ; le dispositif de commande de véhicule à moteur comprenant un logiciel pour la commande d'une pluralité d'applications, le logiciel comprenant les couches suivantes :
une couche d'applications avec la pluralité d'applications ;
une couche de services de base avec une première pluralité de services de base et une deuxième pluralité de services de base, pour l'exécution des applications, la première pluralité de services de base étant conçue pour l'exécution des applications automotrices en temps réel et la deuxième pluralité de services de base étant conçue pour l'exécution des applications d'infotainment ou multimédia ;
une couche d'adaptation avec au moins un premier environnement d'exécution, qui correspond à la première pluralité de services de base et un deuxième environnement d'exécution qui correspond à la deuxième pluralité de services de bas ; et
une couche de système d'exploitation avec le micro-noyau ;
un bloc de construction auquel correspond un système d'exploitation hôte, le système d'exploitation hôte étant intégré dans le dispositif de commande de véhicule à moteur en tant que système d'exploitation hôte virtualisé au moyen d'un hyperviseur implémenté par un bloc de construction, les applications d'infotainment ou multimédia utilisant le système d'exploitation hôte ;
et
une pile de communication commune, par l'intermédiaire de laquelle les blocs de construction peuvent communiquer entre eux au moyen de mécanismes IPC du micro-noyau, le micro-noyau comprenant un mécanisme de planification qui est conçu pour se synchroniser avec des temps externes ou globaux afin de synchroniser le premier système d'exploitation avec des temps externes ou globaux.

2. Dispositif de commande de véhicule à moteur selon la revendication 1, un ou plusieurs des blocs de construction étant conçus comme des serveurs, afin de permettre l'accès des autres blocs de construction à leurs services.

3. Dispositif de commande de véhicule à moteur selon la revendication 1 ou 2, les API des modules étant représentées par des mécanismes IPC correspondants entre les blocs de construction.

4. Dispositif de commande de véhicule à moteur selon l'une des revendications précédentes, au moins un des blocs de construction fournissant un système contrôlé en fonction du temps et au moins un autre des blocs de construction fournissant un système contrôlé en fonction des événements.

5. Dispositif de commande de véhicule à moteur selon la revendication 4, le système contrôlé en fonction du temps étant constitué d'un bus FlexRay et le système contrôlé en fonction des événements étant constitué d'un bus CAN.

6. Dispositif de commande de véhicule à moteur selon l'une des revendications précédentes, un des blocs de construction représentant une pile de mémoire.

7. Dispositif de commande de véhicule à moteur selon l'une des revendications précédentes, comprenant un ou plusieurs pilotes en temps réel, qui sont implémentés en commun ou chacun par un ou plusieurs des blocs de construction.

8. Dispositif de commande de véhicule à moteur selon l'une des revendications précédentes, un ou plusieurs des modules implémentant une interface MOST, Ethernet, Bluetooth et/ou USB.

9. Dispositif de commande de véhicule à moteur selon la revendication 1, les environnements d'exécution étant conçus pour communiquer entre eux par l'intermédiaire de mécanismes IPC du micro-noyau.

10. Dispositif de commande de véhicule à moteur selon la revendication 9, la première partie des applications correspondant au premier environnement d'exécution et une deuxième partie des applications correspondant au deuxième environnement d'exécution et les applications pouvant communiquer entre elles par l'intermédiaire des premier et deuxième environnements d'exécution.
